# EUROPEAN PATENT APPLICATION

(11) **EP 1 096 144 A2**
(43) Date of publication of application: **02.05.2001**
(21) Application number: 00118752.5
(22) Date of filing: 30.08.2000
(51) Int. Cl.: F03D 3/02, F03D 3/04, F02D 9/00

(54) **Wind-driven power generating apparatus**

(30) Priority: 01.11.1999 JP 31100099
(71) Applicant: Miyake, Masaharu, Kawanishi-City, Hyogo-prefecture (JP); Miyake, Kazuya, Suita-City, Osaka-prefecture (JP)
(72) Inventor: Miyake, Masaharu, Kawanishi-City, Hyogo-prefecture (JP)
(74) Representative: MÜLLER & HOFFMANN Patentanwälte

(57) **Abstract**

A wind-driven power generating apparatus includes a rotary shaft extending vertically, and a tubular rotary shaft coaxially fitted around the rotary shaft. Each of the rotary shaft and tubular rotary shaft has a plurality of blades projecting radially therefrom. The blades of the rotary shaft and the blades of the tubular rotary shaft define wind receiving surfaces facing reversed directions. A generator has a winding mounted on one of opposed portions of the rotary shaft and tubular rotary shaft, and a field magnet mounted on the other opposed portion.

## Description

### BACKGROUND OF THE INVENTION

### (1) Field of the Invention

This invention relates to a wind-driven power generating apparatus for generating electricity by using the force of wind. More particularly, the invention relates to a wind-driven power generating apparatus employing a vertical-axis turbine to be capable of generating electricity regardless of the direction of wind and yet with an increased output coefficient.

### (2) Description of the Related Art

Conventional wind-driven power generating apparatus employing vertical-axis turbines, typically, include Savonius windmills, Darrieus windmills, gyromill type windmills and paddle type windmills. Each of these windmills has only one rotor. Natural air current has a low energy density, and besides a non-uniform distribution density. Thus, in manufacturing a wind-driven power generating apparatus capable of generating electricity on a practical scale, a large windmill must be installed to collect sufficient energy. In the case of a vertical-axis windmill apparatus, a mechanism that supports a large windmill has a more complicated structure than for supporting the propeller type. Apart from special purposes, the vertical-axis windmill currently has a limited range of application. The propeller type is predominantly used as large windmills.

However, the propeller type apparatus is very large, and is not suited for a compact size to be installed with ease and yet conveniently achieving a small-scale power generation. The propeller type apparatus, generally, becomes inoperative or is operable only with a markedly reduced efficiency when the direction of wind is reversed. As a result, the apparatus may be installed with greatly limited conditions. The apparatus, even if implemented in a compact form, tends to be restricted to a condition that the apparatus must be installed where strong winds blow constantly from one direction. The apparatus has a drawback that its generating efficiency is markedly lowered with weak winds.

Inventor has conducted extensive researches and found that the above disadvantages of the propeller type may be overcome by satisfying the following conditions:

Firstly, a vertical-axis windmill is preferable as a windmill rotatable regardless of the direction of wind.

Secondly, to increase power generating efficiency, it is necessary to employ means for minimizing frictional resistance in a structure that supports rotating parts. For this purpose, it is preferable to employ a device utilizing magnetic repulsion.

Thirdly, a generator must be operated efficiently in order to promote power generating efficiency still further.

### SUMMARY OF THE INVENTION

A primary object of this invention, therefore, is to maximize power generating efficiency regardless of the direction of wind.

A further object of this invention is to maximize power generating efficiency by efficiently rotating a windmill even with small forces of wind and regardless of the direction of wind.

The above objects are fulfilled, according to this invention, by a wind-driven power generating apparatus comprising a rotary shaft extending vertically; a tubular rotary shaft coaxially fitted around the rotary shaft, each of the rotary shaft and the tubular rotary shaft having a plurality of blades projecting radially therefrom, the blades of the rotary shaft and the blades of the tubular rotary shaft defining wind receiving surfaces facing reversed directions; and a generator including a winding mounted on one of opposed portions of the rotary shaft and the tubular rotary shaft, and a field magnet mounted on the other of the opposed portions.

In the above wind-driven power generating apparatus, the blades defining wind receiving surfaces reversed from each other cause the rotary shaft and tubular rotary shaft to rotate constantly in opposite directions whichever direction the wind may blow from. As a result, the winding and field magnet rotate in the opposite directions.

This wind-driven power generating apparatus has a basic construction employing a vertical-axis windmill which provides a strong motive torque. The rotary shaft and tubular rotary shaft are rotatable in opposite directions to rotate the winding and field magnet in the opposite directions. Thus, in contrast with the conventional propeller type, the rotary shaft and tubular rotary shaft of this apparatus are constantly rotated regardless of the direction of wind, to assure a markedly improved efficiency of power generation.

In another aspect of this invention, a wind-driven power generating apparatus comprises a rotary shaft extending vertically; a tubular rotary shaft coaxially fitted around the rotary shaft, each of the rotary shaft and the tubular rotary shaft having a plurality of blades projecting radially therefrom, the blades of the rotary shaft and the blades of the tubular rotary shaft defining wind receiving surfaces facing reverse directions; and a generator including a winding mounted on one of opposed portions of the rotary shaft and the tubular rotary shaft, and a field magnet mounted on the other of the opposed portions; wherein an upper end and a lower end of the rotary shaft and a lower end of the tubular rotary shaft are supported through bearings with magnetic repulsion for constantly levitating the upper end and the lower ends in axial directions and maintaining the upper end and the lower ends out of contact in radial directions, and an upper end of the tubular rotary shaft is supported through a bearing to be out of contact at least in the radial directions.

In the above wind-driven power generating apparatus, the blades defining wind receiving surfaces reversed from each other cause the rotary shaft and tubular rotary shaft to rotate constantly in opposite directions whichever direction the wind may blow from. As a result, the winding and field magnet rotate in the opposite directions. Further, the upper end and lower end of the rotary shaft and the lower end of the tubular rotary shaft are constantly levitated by the repulsive forces of magnets. The bearings support the upper end and lower end of the rotary shaft and the lower end of the tubular rotary shaft to be out of contact in the radial directions as well. The upper end of the tubular rotary shaft also is supported by a bearing to be out of contact at least in the radial directions. As a result, the rotary shaft and tubular rotary shaft are supported by magnetic repulsion to be out of contact with the fixed apparatus frame in both axial and radial directions.

This wind-driven power generating apparatus employs a vertical-axis windmill structure with the rotary shaft and tubular rotary shaft rotatable in opposite directions to rotate the winding and field magnet in the opposite directions. Consequently, in contrast with the conventional propeller type, the rotary shaft and tubular rotary shaft of this apparatus are constantly rotated regardless of the direction of wind, to assure a markedly improved efficiency of power generation. Moreover, the rotary shaft and tubular rotary shaft are supported by magnetic repulsion to be out of contact with the apparatus frame. As a result, the apparatus frame imparts no frictional resistance to the rotary shaft or tubular rotary shaft. The windmill is reliably rotated even by a weak force of wind, to maximize the efficiency of power generation.

In the above apparatus according to this invention, it is preferred that the bearings for supporting the rotary shaft and tubular rotary shaft include permanent magnets so that the upper and lower ends of the rotary shaft and the lower end, and the upper end, as necessary, of the tubular rotary shaft are supported out of contact in both axial and radial directions.

Then, the apparatus may be constructed simply and at low cost. Compared with a case of the rotary shaft and tubular rotary shaft being supported by mechanical bearings such as thrust bearings that produce friction, the magnetic bearings eliminate the possibility of a large part of wind energy applied to the windmill being lost to friction resistance. As a result, the two shafts are rotatable exceedingly smoothly to realize a greatly improved power generating efficiency.

Preferably, an intermediate portion of the rotary shaft also is axially supported in a non-contact fashion.

This construction supports, with increased reliability, the rotary shaft which bears a relatively heavy load. Besides, the rotary shaft may be rotated very smoothly to promote the efficiency of power generation.

Preferably, each of the bearings for maintaining the rotary shaft and the tubular rotary shaft out of contact in the radial directions includes electromagnets.

This construction assures excellent rotational characteristics to produce no friction of the bearings. In addition, rotating energy may be saved by a great extent to promote the efficiency of power generation.

Preferably, the permanent magnets employed in the bearings for supporting the rotary shaft and tubular rotary shaft are replaced with superconducting magnets.

This construction supports the rotary shaft and tubular rotary shaft with magnetic repulsion to be out of contact in the axial and radial directions with increased effect. Thus, the efficiency of power generation is improved still further.

Preferably, the magnets disposed on the apparatus frame for supporting the rotary shaft and tubular rotary shaft in the radial directions comprise superconducting coils.

With this construction, the rotary shaft and tubular rotary shaft are forcibly rotated to operate the generator. Thus, electricity may be generated even in a windless condition. In this case, electric power is required only for a startup, thereby to realize an economical power generation.

It is preferred that the rotary shaft supports, at the upper end thereof, wedge noses corresponding to the upper and lower blades, respectively, and a wind vane rotatable in a non-contact fashion through a magnetic bearing, the wind vane having a posture maintaining device disposed in a lower position thereof for maintaining the wind vane spaced apart from posts by using magnetic repulsion.

The wind vane with the wedge noses causes the energy of natural air flows to concentrate on the wind receiving surfaces in the first halves of the directions of rotation of the blades. No load is applied to the second halves in the directions of rotation which would become a rotational resistance. As a result, the rotating efficiency of the blades is greatly improved to realize efficient power generation. In addition, the wind vane is maintained in a proper rotational posture by magnetic repulsion. As a result, the wind vane is rotatable very smoothly to follow the direction of wind sensitively. Wind energy is applied to the blades without waste, to further improve the rotating efficiency of the blades.

Other features and advantages of this invention will be apparent from the following description of the preferred embodiments to be taken with the accompanying drawings.

### BRIEF DESCRIPTION OF THE DRAWINGS

Fig. 1 is a perspective view of a wind-driven power generating apparatus in a first embodiment of this invention;
Fig. 2 is an explanatory view, partly in section, of the first embodiment including a power generating and storing system;
Fig. 3 is a section taken on line A-A of Fig. 1;
Fig. 4 is a section taken on line B-B of Fig. 1;
Fig. 5 is an enlarged sectional view of a bearing at an upper end of a rotary shaft;
Fig. 6 is an enlarged sectional view of a bearing at a lower end of the rotary shaft and a bearing at an upper end of a tubular rotary shaft;
Fig. 7 is a sectional view of a principal portion of a wind-driven power generating apparatus in a second embodiment of this invention;
Fig. 8 is an enlarged view, partly in section, of a principal portion of a wind-driven power generating apparatus in a third embodiment of this invention;
Fig. 9 is an explanatory view of a principal portion of a wind-driven power generating apparatus in a fifth embodiment of this invention;
Fig. 10 is a view showing an operation of the fifth embodiment shown in Fig. 9;
Fig. 11 is an overall plan view of a wind-driven power generating apparatus in a sixth embodiment of this invention;
Fig. 12 is a front view of the apparatus shown in Fig. 11;
Fig. 13 is a perspective view of a wind vane;
Fig. 14 is a section taken on line A-A of Fig. 12 and showing an operation;
Fig. 15 is a section taken on line B-B of Fig. 12 and showing an operation;
Fig. 16 is an enlarged sectional view of magnetic bearings; and
Fig. 17 is an enlarged perspective view of a lower posture retaining device.

### DESCRIPTION OF THE PREFERRED EMBODIMENTS

Preferred embodiments of this invention will be described in detail hereinafter with reference to the drawings.

### 〈First Embodiment〉

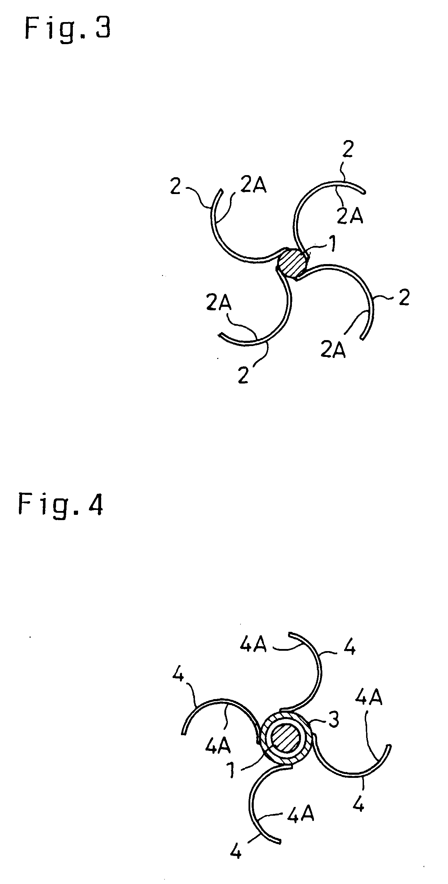

In these figures, numeral 1 denotes a rotary shaft with an axis extending vertically. The rotary shaft 1 has a plurality of blades (four blades in the illustrated example) 2 attached to and projecting radially from the upper half thereof. The lower half of rotary shaft 1 extends through a hollow, tubular rotary shaft 3. The tubular rotary shaft 3 has a plurality of blades (four blades in the illustrated example) 4 attached to and projecting radially from an outer peripheral surface thereof. These blades 4 define wind receiving surfaces 4A facing an opposite direction to wind receiving surfaces 2A of the blades 2 attached to the rotary shaft 1 (see Figs. 3 and 4). By employing the vertical-axis windmill structure with the reversed wind receiving surfaces 2A and 4A of blades 2 and 4, the rotary shaft 1 and tubular rotary shaft 3 are constantly rotatable in opposite directions regardless of the direction from which the wind blows.

The lower end of rotary shaft 1 extends further downward than the lower end of tubular rotary shaft 3. A generator 5 has a winding 6 thereof secured to a projecting end region of rotary shaft 1. The lower end of tubular rotary shaft 3 is continuous with a cylindrical frame 7 having a field magnet 8 consisting of a permanent magnet attached to an inner surface thereof. The winding 6 and field magnet 8 are rotatable in opposite directions to generate electricity.

In this invention, as described above, the rotary shaft 1 and tubular rotary shaft 3 are rotatable in opposite directions owing to the blades 2 and 4 having the reversed wind receiving surfaces. As a result, the winding 6 and field magnet 8 are rotatable in opposite directions to enable the generator 5 to generate electricity with a greatly increased efficiency.

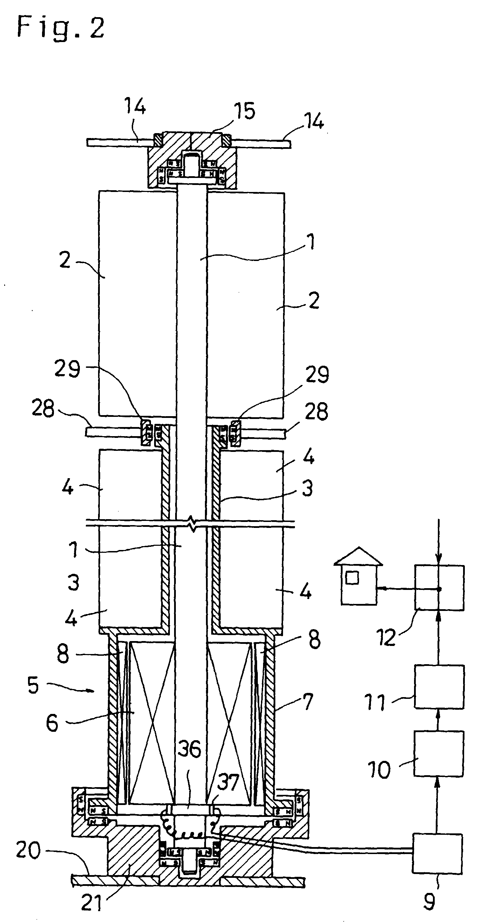

As shown in Fig. 2, the electricity provided by the generator 5 is transmitted through a stabilizer 9 to a transformer 10 for voltage transformation. The electricity is then transmitted to and stored in a capacitor 11 to be consumed at a site of demand as appropriate. However, when the power generation by the generator 5 is difficult, the consumer switches a converter 12 to an ordinary commercial line to use electricity supplied therethrough.

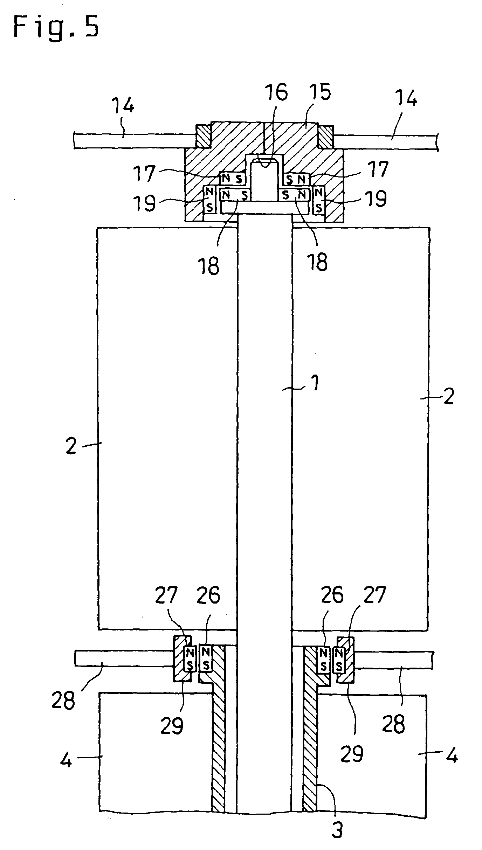

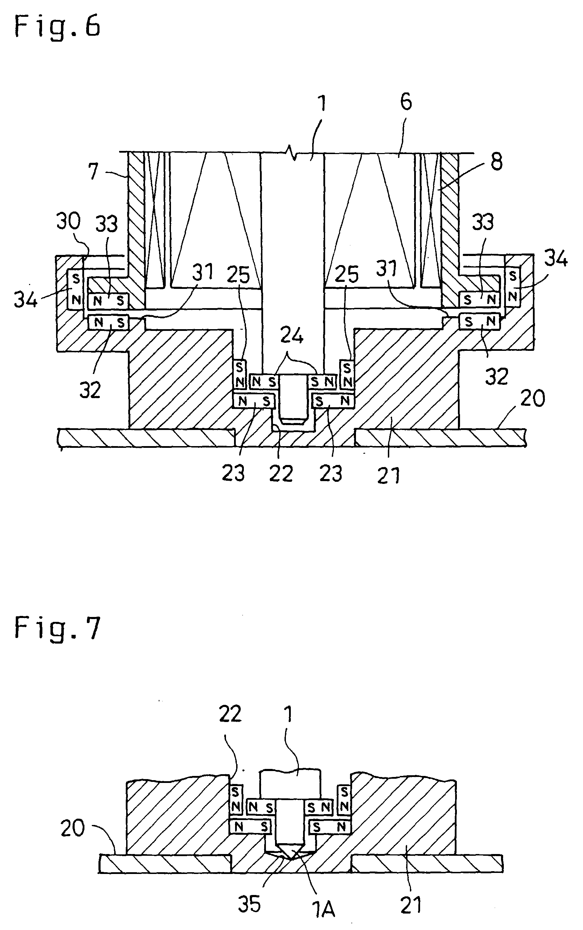

Further, as shown in Figs. 5 and 6, the rotary shaft 1 and tubular rotary shaft 3 are supported by a fixed framework through bearings with magnetic repulsion. This invention is characterized also in that, owing to the magnetic repulsion, the rotary shaft 1 and tubular rotary shaft 3 are supported without contact in vertical directions (axial directions) and radial directions.

The rotary shaft 1 is supported at an upper end thereof by four posts 13 arranged therearound. The posts 13 have support arms 14 formed integral with upper ends thereof and extending inwardly toward a common center, respectively. A bearing frame 15 is rigidly attached to free ends of the support arms 14. As shown in Fig. 5, the bearing frame 15 defines a recess 16 for receiving the upper end of rotary shaft 1. The bearing frame 15 has a permanent magnet 17 fitted in the recess 16 to surround the upper end of rotary shaft 1. The rotary shaft 1 has a permanent magnet 18 fixed to a position downwardly displaced from the upper end thereof and with a slight vertical spacing from the permanent magnet 17. The permanent magnet 17 in the bearing frame 15 and the permanent magnet 18 adjacent the upper end of rotary shaft 1 are arranged with polarities repulsive to each other. That is, the two permanent magnets 17 and 18 are arranged with the south poles placed inwardly and the north poles placed outwardly to repel each other. As a result, the rotary shaft 1 is vertically supported by, without contacting, the bearing frame 15.

The bearing frame 15 has another permanent magnet 19 fitted in the recess 16 and surrounding the permanent magnet 18 mounted adjacent the upper end of rotary shaft 1. This magnet 19 has the north pole in an upper position thereof opposed to the outer periphery of permanent magnet 18. That is, the permanent magnet 19 has an upper portion acting as the north pole, and a lower portion acting as the south pole. Thus, the north pole on the outer periphery of permanent magnet 18 and the north pole on the upper portion of permanent magnet 19 are opposed to and repel each other. As a result, the rotary shaft 1 is also radially supported by, without contacting, the bearing frame 15.

In addition, the lower end of rotary shaft 1 is, as is the upper end, supported by a non-contact bearing structure having permanent magnets. Specifically, as shown in Fig. 6, a base 20 supports a lower bearing frame 21 defining a recess 22 for receiving the lower end of rotary shaft 1. The bearing frame 21 has a permanent magnet 23 fitted in the recess 22 to surround the lower end of rotary shaft 1. The rotary shaft 1 has a permanent magnet 24 fixed to a position upwardly displaced from the upper end thereof and with a slight vertical spacing from the permanent magnet 23 in the bearing frame 21. The permanent magnet 23 in the bearing frame 21 and the permanent magnet 24 adjacent the lower end of rotary shaft 1 are arranged with polarities repulsive to each other. That is, the two permanent magnets 23 and 24 are arranged with the south poles placed inwardly and the north poles placed outwardly to repel each other. As a result, the rotary shaft 1 is vertically supported by, without contacting, the bearing frame 21.

The bearing frame 21 has another permanent magnet 25 fitted in the recess 22 and surrounding the permanent magnet 24 mounted adjacent the lower end of rotary shaft 1. This magnet 25 has the north pole in a lower position thereof opposed to the outer periphery of permanent magnet 24. That is, the permanent magnet 25 has a lower portion acting as the north pole, and an upper portion acting as the south pole. Thus, the north pole on the outer periphery of permanent magnet 24 and the north pole on the lower portion of permanent magnet 25 are opposed to and repel each other. As a result, the rotary shaft 1 is also radially supported by, without contacting, the bearing frame 21.

A bearing device for the tubular rotary shaft 3 will be described next. The tubular rotary shaft 3 also is supported, without contacting the fixed framework, using magnetic repulsion. Specifically, as shown in Fig. 5, the tubular rotary shaft 3 has a permanent magnet 26 rigidly attached to and extending all around an upper end thereof. The permanent magnet 26 has an upper portion thereof acting as the north pole, and a lower portion acting as the south pole. The permanent magnet 26 is radially opposed and surrounded, with a slight spacing in between, by a fixed permanent magnet 27. The fixed permanent magnet 27 is mounted in a bearing frame 29 rigidly attached to free ends of support arms 28 extending toward a common center from intermediate positions of the posts 13. The permanent magnet 27 has vertical polarity, i.e. the north pole above and the south pole below (which may be reversed, i.e. the south pole above and the north pole below). As a result, the permanent magnet 26 at the upper end of tubular rotary shaft 3 and the fixed permanent magnet 27 repel each other, whereby the upper end of tubular rotary shaft 3 is radially supported by, without contacting, the bearing frame 29.

The lower end of tubular rotary shaft 3 is supported as follows.

As shown in Fig. 6, the lower bearing frame 21 defines a large diameter recess 30 for receiving the lower end of tubular rotary shaft 3. This recess 30 is continuous upward from the recess 22 formed in the lower bearing frame 21 for receiving the lower end of rotary shaft 1. The recess 30 has a permanent magnet 32 fitted in and extending all around a bottom surface 31 thereof. The tubular rotary shaft 3 has a permanent magnet 33 fixed to and extending all around the lower end thereof, with a slight vertical spacing from the fixed permanent magnet 32. The permanent magnet 32 in the bearing frame 21 and the permanent magnet 33 at the lower end of tubular rotary shaft 3 are arranged with polarities repulsive to each other. That is, the two permanent magnets 32 and 33 are arranged with the south poles placed inwardly and the north poles placed outwardly to repel each other. As a result, the tubular rotary shaft 3 is vertically supported by, without contacting, the bearing frame 21.

The bearing frame 21 has a further permanent magnet 34 fitted in the recess 30 and surrounding the permanent magnet 33 mounted on the lower end of tubular rotary shaft 3. This magnet 34 has the north pole in a lower position thereof opposed to the outer periphery of permanent magnet 33. That is, the permanent magnet 34 has a lower portion acting as the north pole, and an upper portion acting as the south pole. Thus, the north pole on the outer periphery of permanent magnet 33 at the lower end of tubular rotary shaft 3 and the north pole on the lower portion of permanent magnet 34 in the bearing frame 21 are opposed to and repel each other. As a result, the tubular rotary shaft 3 is also radially supported by, without contacting, the bearing frame 21.

### 〈Second Embodiment〉

Fig. 7 shows a different construction of the lower bearing frame 21. In the first embodiment shown in Fig. 6, the lower end of rotary shaft 1 is supported only by the repulsion of permanent magnets. In the second embodiment, the weight of rotary shaft 1 is borne partly by the lower bearing frame 21. This construction has the advantage of supporting the rotary shaft 1 with increased reliably. This construction will particularly be described hereinafter.

The rotary shaft 1 has a tapered or pointed lower end 1A loosely fitted in a hole 35 formed in the bottom of recess 22 of lower bearing frame 21 and having a shape of an inverted cone. Thus, the bearing frame 21 supports, through a point contact, part of the weight falling on the rotary shaft 1. In this way, the rotary shaft 1 is supported by the bearing frame 21 reliably with little frictional resistance therebetween.

As will be understood from the foregoing detailed description, this invention employs a construction where the rotary shaft 1 for rotating the winding 6 of generator 5 and the tubular rotary shaft 3 for rotating the field magnet 8 are supported in a non-contact fashion vertically and radially by the bearing frames, basically using the repulsive forces of permanent magnets. This construction is effective to eliminate the rotational friction of the two shafts. Consequently, the rotary shaft 1 and tubular rotary shaft 3 may be rotated effectively even with little wind force, thereby greatly improving the efficiency of power generation.

The described non-contact support structure utilizing the repulsive forces of permanent magnets is the most desirable device for supporting the rotary shaft 1 and tubular rotary shaft 3. However, the construction utilizing magnetic repulsive forces may be replaced, as necessary, by thrust bearings, not shown, mounted between the opposite ends of rotary shaft 1 and the opposite ends of tubular rotary shaft 3, and the bearing frames 15, 21 and 29. Further, air bearings may be employed for radially supporting the shafts 1 and 3. The air bearings may of course be static pressure bearings or dynamic pressure bearings.

Numeral 36 in Fig. 2 denotes a commutator attached to the rotary shaft 1. Numeral 37 denotes a brush that contacts the outer peripherally of commutator 36 and is connected to the stabilizer 9.

### 〈Third Embodiment〉

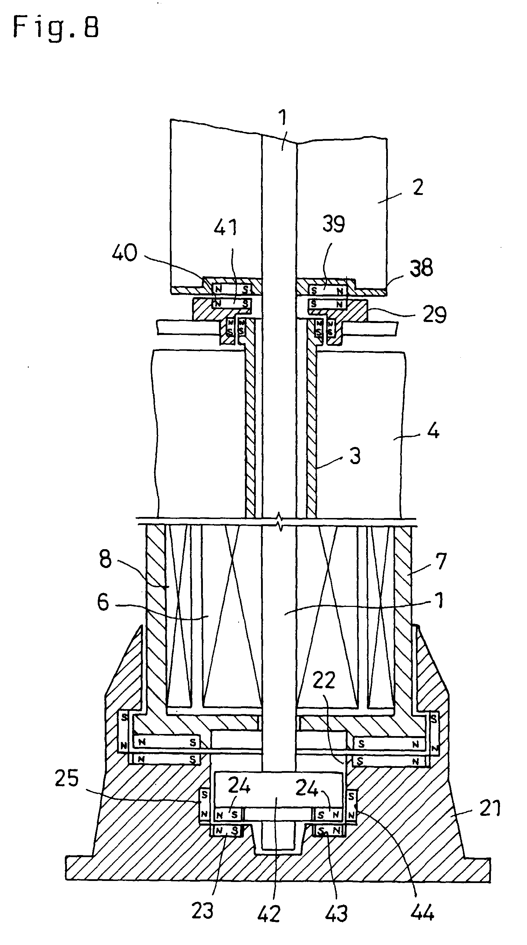

The construction shown in Fig. 8 exemplifies bearings employed chiefly in a large wind-driven power generating apparatus. Specifically, such bearings are used for supporting the lower ends of blades 2 and the lower ends of rotary shaft 1 and tubular rotary shaft 3.

A flat disk 38 is rigidly attached to the lower ends of blades 2. A plurality of permanent magnets 39 are arranged circumferentially in a central region of disk 38, with the south poles disposed inwardly and the north poles disposed outwardly. A recess 40 is formed in the upper surface of bearing frame 29 supporting the upper end of tubular rotary shaft 3. The recess 40 is opposed to the permanent magnet 39 from below. A plurality of permanent magnets 41 are arranged circumferentially in the recess 40, with the south poles disposed inwardly and the north poles disposed outwardly. With this construction, the large and heavy blades 2 are axially supported in the non-contact fashion, along with the rotary shaft 1 and the winding 6 of generator 5, by the repulsive force of permanent magnets 39 and 41. That is, the rotary shaft 1 is supported at the upper and lower ends, and in an intermediate position directly through the blades 2, by the non-contact bearings. This construction realizes a greatly improved supporting precision and strength.

The rotary shaft 1 has a large, thick boss 42 formed integrally therewith in a position slightly upward from the lower end. The permanent magnet 24 noted hereinbefore is attached to the lower surface of boss 42. The permanent magnet 23 in the bearing frame 21 below and opposed to the permanent magnet 24 on the rotary shaft 1 is embedded in a receiving hole 43 formed in the bottom of recess 22. The permanent magnet 25 opposed to the periphery of permanent magnet 24 also is embedded in a receiving hole 44 formed in the inner surface of recess 22. With this construction, the permanent magnets are retained on the rotary shaft 1 and tubular rotary shaft 3 with increased reliability, and the two shafts are supported with greatly increased precision and strength.

In each of the foregoing embodiments, permanent magnets known as the passive type are employed as the magnetic bearings. Such magnets have an advantage of low cost. However, active magnets or electromagnets, with the magnetism thereof automatically controlled, may be used as necessary. This is preferable since these magnets provide excellent rotational characteristics and achieve rotational energy saving.

### 〈Fourth Embodiment〉

The permanent magnets 17, 19, 23, 25, 27, 32 and 34 mounted in the upper and lower bearing frames 15, 21 and 29 in the foregoing embodiments may be replaced with superconducting magnets. Specifically, these are superconducting coils. This construction is effective to support the rotary shaft 1 and tubular rotary shaft 3 axially and radially, in the non-contact fashion, by the magnetic repulsive forces, thereby further promoting the efficiency of power generation.

### 〈Fifth Embodiment〉

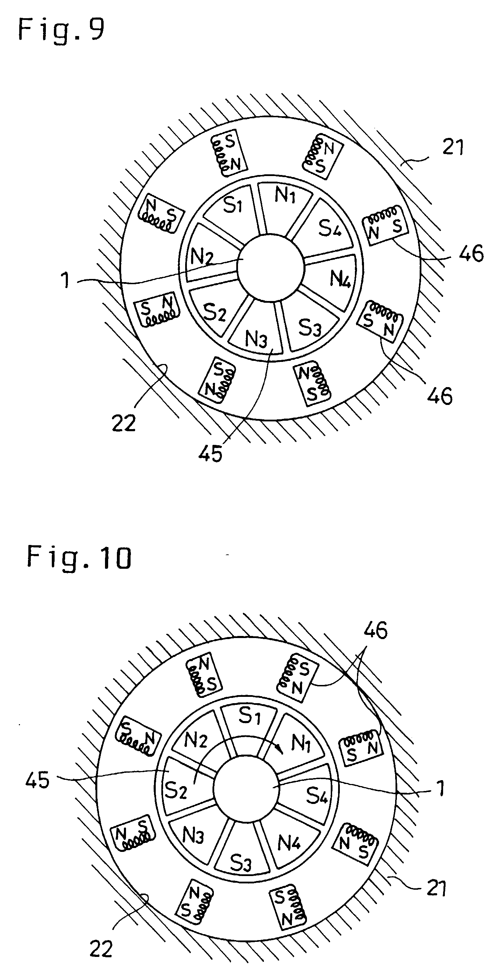

Next, the construction shown in Figs. 9 and 10 exemplifies the superconduction technique employed in place of the permanent magnets used in the foregoing embodiments as the device for supporting the rotary shaft 1 and tubular rotary shaft 3. The use of the superconduction technique provides the advantage of forcibly rotating the rotary shaft 1 and tubular rotary shaft 3 to generate electricity at windless times.

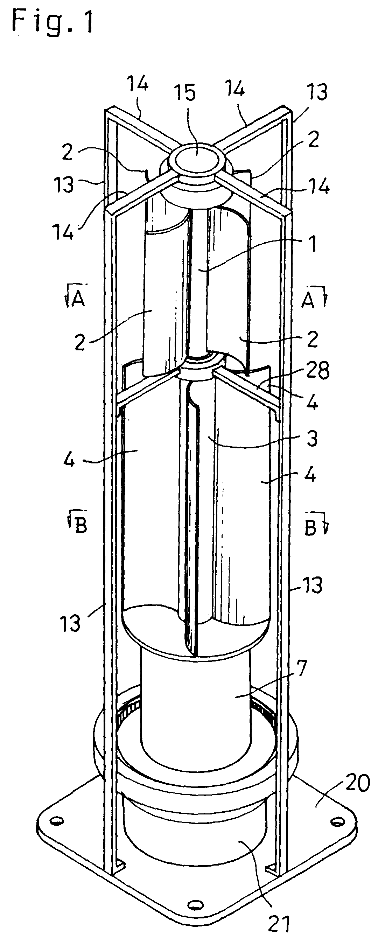

The basic construction is the same as that shown in Figs. 1 through 7. The difference lies in the following point. A case of the superconduction technique employed in the bearing at the lower end of rotary shaft 1 is illustrated as one example. As shown in Fig. 9, an appropriate number of permanent magnets (eight permanent magnets in the illustrated example) 45 are arranged around the lower end of rotary shaft 1, with the south poles and north poles alternating circumferentially. Superconducting coils 46 are arranged on the inner peripheral surface of the recess 22 of bearing frame 21 opposed to the permanent magnets 45. These superconducting coils 46 correspond in number to the permanent magnets 45 arranged on the rotary shaft 1.

With this construction, as shown in Figs. 9 and 10, the polarity of superconducting coils 46 is changed successively by applying an AC to the coils 46. This change has a timed relationship with the magnets on the rotary shaft 1, whereby the rotary shaft 1 is forcibly rotated even in a windless condition. Since the superconducting coils 46 are employed, electric power is required only for a startup, thereby to realize an economical power generation.

By employing the superconduction technique in this way, the generator 5 may be rotated forcibly even in a windless condition to generate electricity.

In a use state with the forcible rotation taking place, the blades 2 and 4 impart a resistance to the rotation, which is undesirable for the power generating action of generator 5. To eliminate this drawback, it is preferable that the blades 2 and 4 are adapted movable. That is, in time of forcible rotation, the blades 2 and 4 should be switched to place the wind receiving surfaces 2A and 4A along the directions of rotation of rotary shaft 1 and tubular rotary shaft 3 as much as possible.

The forcible rotating device having these superconducting coils will serve the purpose well only if employed for the bearings at the lower ends of rotary shaft 1 and tubular rotary shaft 3. However, such a device may be applied also to the upper ends of shafts 1 and 3, as necessary, thereby imparting forcibly rotating forces to the opposite ends of each shaft.

### 〈Sixth Embodiment〉

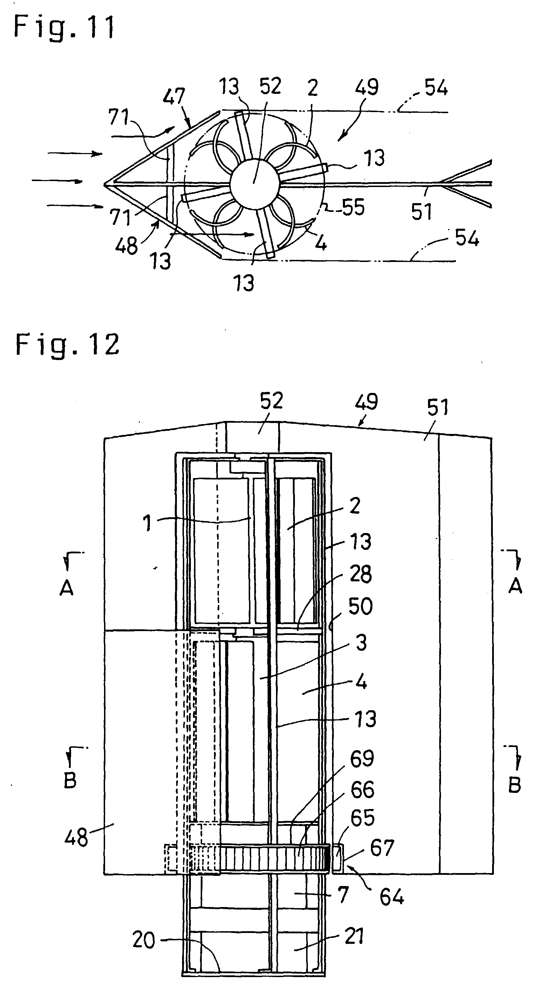

The sixth embodiment shown in Figs. 11 through 17 is intended to provide a desired effect of promoting the rotating efficiency of blades 2 and 4. To achieve such an effect, this embodiment has a characterizing feature in employing a wind vane 49 having wedge noses 47 and 48. The wind vane 49 effectively concentrates the energy of natural air flows on the first halves F in the directions of rotation of blades 2 and 4.

The basic construction is the same as the embodiment shown in Figs. 1 through 7. The difference consists in the following point.

As shown in Fig. 11, the wind vane 49 has, formed at one end thereof, the wedge nose 47 which corresponds to the upper blades 2, and the wedge nose 48 which corresponds to the lower blades 4. The wind vane 49 is supported by the rotary shaft 1 (more particularly, the bearing frame 15 above the rotary shaft 1) to follow the directions of wind. The wind vane 49 is supported in a position slightly offset from the middle position thereof to be rotatable about the rotary shaft 1, so that the forward ends of wedge noses 47 and 48 are constantly turned windward whichever direction the wind may blow from.

The wind vane 49 includes a base plate 51 basically in the form of a single plate defining an elongate aperture 50 slightly offset from the middle position thereof and opening only at the bottom. The aperture 50 has a right and left width slightly larger than a distance between the outer surfaces of an opposed pair of posts 13. A cap 52 opening downward is formed integrally with an upper portion of base plate 51 and slightly offset sideways from the middle position thereof. The cap 52 is fitted over the upper bearing frame 15. A magnetic bearing 53 is disposed between the interior of cap 52 and the upper bearing frame 15. The entire wind vane 49 is rotatably supported, in a non-contact fashion, by the upper bearing frame 15 through the magnetic bearing 53. Consequently, the end having the wedge noses 47 and 48 is constantly turned windward whichever direction the wind may blow from.

The upper and lower wedge noses 47 and 48 are opposed to each other across the base plate 51, one in front and the other at the back. This arrangement is adopted in order to direct, with a maximum effect, wind energy to the wind receiving surfaces 2A and 4A in the first halves F in the directions of rotation of blades 2 and 4. That is, the wedge noses 47 and 48 shield the windward faces in the second halves B in the directions of rotation of blades 2 and 4, so that the energy of natural air flows is not applied to these windward faces. In this way, a minimum rotational resistance is applied to the blades 2 and 4.

This construction will be described in greater detail hereinafter.

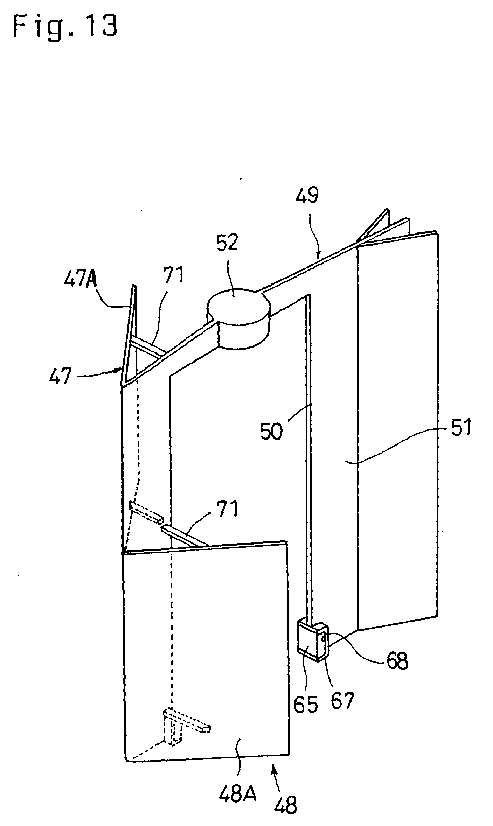

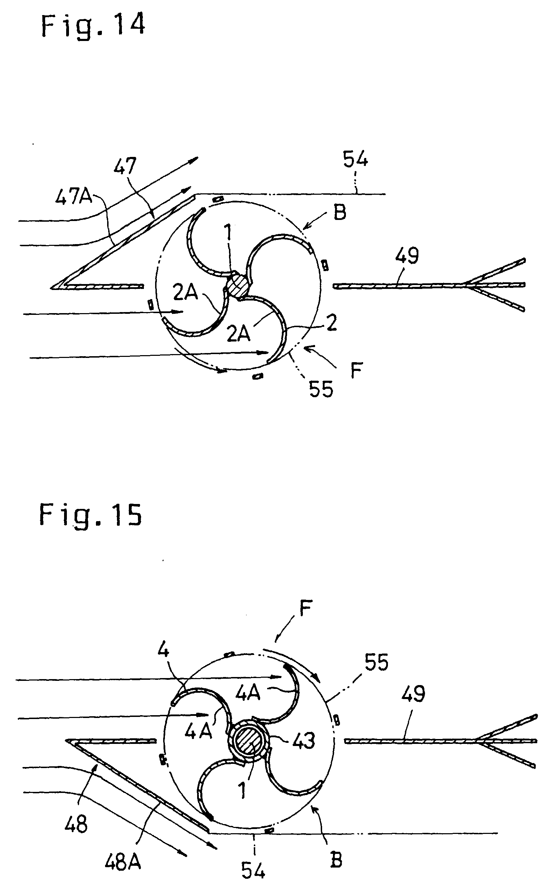

As shown in Fig. 13, shielding plates 47A and 48A extend from one end of base plate 51 to respective free ends, and progressively away from the base plate 51. As shown in Figs. 14 and 15, the shielding plates 47A and 48A shield the windward faces in the second halves B in the directions of rotation of blades 2 and 4. It is essential that, as shown in Fig. 11, phantom lines 54 extending leeward from the rear ends of shielding plates 47A and 48A parallel to the base plate 51 are located outwardly of outer edges of blades 2 and 4. As shown in Fig. 12, the lower end of upper wedge nose 47 is located below the lower ends of upper blades 2, while the upper end of lower wedge nose 48 is located above the upper ends of lower blades 4. That is, the lower end of upper wedge nose 47 and the upper end of lower wedge nose 48 are substantially level with the intermediate support arms 28.

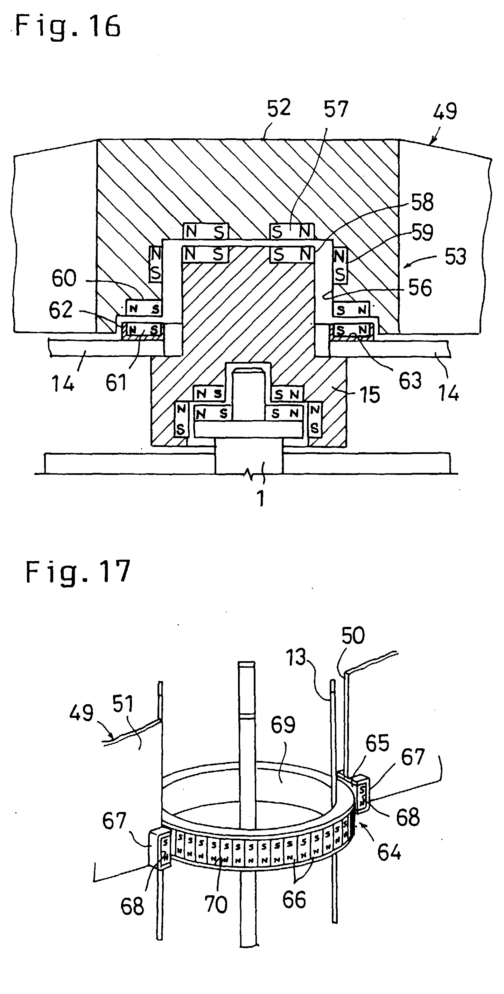

The magnetic bearing 53 has a construction as shown in Fig. 16. The cap 52 defines a recess 56 for receiving the upper end of bearing frame 15. The cap 52 has a permanent magnet 57 fitted in the recess 56 and opposed to the upper end of bearing frame 15. The bearing frame 15 has a permanent magnet 58 fixed to the upper end thereof with a slight vertical spacing from the permanent magnet 57. The permanent magnet 57 in the cap 52 and the permanent magnet 58 on the upper end of bearing frame 15 are arranged with polarities repulsive to each other. That is, the two permanent magnets 57 and 58 are arranged with the south poles placed inwardly and the north poles placed outwardly to repel each other. As a result, the cap 52 is vertically supported by, without contacting, the bearing frame 15.

The cap 52 has another permanent magnet 59 fitted in the recess 56 and surrounding the permanent magnet 58 mounted on the upper end of bearing frame 15. This magnet 59 has the north pole in an upper position thereof opposed to the outer periphery of permanent magnet 58. That is, the permanent magnet 59 has an upper portion acting as the north pole, and a lower portion acting as the south pole. Thus, the north pole on the outer periphery of permanent magnet 58 and the north pole on the upper portion of permanent magnet 59 are opposed to and repel each other. As a result, the cap 52 is also radially supported by, without contacting, the bearing frame 15.

In addition, the cap 52 has a permanent magnet 60 fixed to the lower edge of recess 56 to extend circumferentially thereof, with the south pole facing inwardly. The upper support arms 14 have a permanent magnet 61 fixed thereto with a slight vertical spacing from the permanent magnet 60. These permanent magnets 60 and 61 are arranged with polarities repulsive to each other. That is, the two permanent magnets 60 and 61 are arranged with the south poles placed inwardly and the north poles placed outwardly to repel each other. As a result, the cap 52 is vertically supported by, without contacting, the upper support arms 14 also. The permanent magnet 61 on the support arms 14 is supported by an annular mount 62 fixed to the four support arms 14 extending radially from the bearing frame 15. The mount 62 defines a groove 63 opening upward. The permanent magnet 61 is fitted in the groove 63 and fixed therein with a known adhesive or the like.

Further, the wind vane 49 includes a lower posture retaining device 64 provided in a lower position thereof, which utilizes magnetic repulsion for allowing the wind vane 49 to rotate smoothly without contacting the posts 13. The lower posture retaining device 64 has the following specific construction.

As shown in Fig. 17, the wind vane 49 has permanent magnets 65 mounted on opposite lower edges of elongate aperture 50, with upper portions of the magnets 65 acting as the south poles. Permanent magnets 66 are arranged in a ring form around the four posts 13 with a slight spacing from the pair of permanent magnets 65. Consequently, the lower end of wind vane 49 is smoothly rotatable with the repulsion of these permanent magnets, without colliding with the posts 13.

The permanent magnets 65 on the wind vane 49 are attached to mounts 67 secured to the lower edges of elongate aperture 50 of wind vane 49. More particularly, the mounts 67 define grooves 68 opening to the aperture 50. The permanent magnets 65 are fitted in the grooves 68 and fixed therein with an adhesive or the like. The permanent magnets 66 on the posts 13 are attached to an annular mount 69 secured to and surrounding the four posts 13. More particularly, the mount 69 defines a groove 70 opening laterally outward. The permanent magnets 66 are fitted in the groove 70 and fixed therein with an adhesive or the like.

Assume that air is flowing in the direction indicated by arrows (i.e. from left to right) in Fig. 11. The air flows are deflected sideways by the upper wedge nose 47 and lower wedge nose 48. As shown in Figs. 14 and 15, one shunt current flows leeward along the wind vane 49 to strike the first halves F in the directions of rotation of upper blades 2 and lower blades 4. The other shunt currents are guided by the shielding plates 47A and 48A (wedge noses 47 and 48) to flow leeward and away from the wind vane 49. Finally, these shunt currents flow from the leeward edges of shielding plates 47A and 48A through areas outwardly of loci of rotation 55 of blades 2 and 4. Thus, wind energy is never applied to the second halves B in the directions of rotation of blades 2 and 4, to avoid an unnecessary rotational resistance being applied to the blades 2 and 4. The wind energy is intensively applied to the wind receiving surfaces 2A and 4A to assure a greatly improved blade rotating efficiency for efficient power generation.

The upper end of wind vane 49 is supported by the upper bearing frame 15 through the magnetic bearing 64. The lower end of wind vane 49 is maintained in a proper rotational posture by the magnetic repulsion of permanent magnets 65 and 66 of lower posture retaining device 64. As a result, the wind vane 49 is rotatable very smoothly to follow the direction of wind sensitively, whereby wind energy is efficiently applied to the blades.

Numeral 71 shown in Figs. 11 and 13 denotes support frames for supporting the shielding plates 47A and 48A.

Chiefly the rotating components employed in the foregoing embodiments, such as the rotary shaft 1, blades 2 and 4, tubular rotary shaft 3, the core on which the winding 6 is mounted, cylindrical frame 7 and wind vane 49, preferably are formed of a plastic material. This achieves a lightweight construction to assure smooth and light rotations for a further improved power generating efficiency. In particular, the blades 2 and 4, tubular rotary shaft 3, the core of winding 6, cylindrical frame 7 and wind vane 49 should be formed of a plastic material.

The plastic material may be selected from the following materials: phenol resin, urea resin, FRP (fiber reinforced plastic), epoxy resin, silicon resin, polyamide, polyacetate, polycarbonate, thermoplastic polyester, modified PPE, and fluororesin. Particularly preferable are polyamide, polyacetate, polycarbonate, thermoplastic polyester, modified PPE, and fluororesin; Firstly, these materials basically are far lighter than metals. In addition, each has excellent heat resistance, electric insulation, impact resistance, toughness, flame resistance, mechanical performance or weather resistance.

The constructions illustrated in the foregoing embodiments represent only schematic examples. The sizes and forms of the components may be determined, as appropriate, according to application, e.g. household use or business use. The described embodiments may of course be combined without departing from the intended objects of this invention.

## Claims

1. A wind-driven power generating apparatus comprising:
a rotary shaft extending vertically;
a tubular rotary shaft coaxially fitted around said rotary shaft;
each of said rotary shaft and said tubular rotary shaft having a plurality of blades projecting radially therefrom, the blades of said rotary shaft and the blades of said tubular rotary shaft defining wind receiving surfaces facing reversed directions; and
a generator including a winding mounted on one of opposed portions of said rotary shaft and said tubular rotary shaft, and a field magnet mounted on the other of said opposed portions.

2. A wind-driven power generating apparatus comprising:
a rotary shaft extending vertically;
a tubular rotary shaft coaxially fitted around said rotary shaft;
each of said rotary shaft and said tubular rotary shaft having a plurality of blades projecting radially therefrom, the blades of said rotary shaft and the blades of said tubular rotary shaft defining wind receiving surfaces facing reverse directions; and
a generator including a winding mounted on one of opposed portions of said rotary shaft and said tubular rotary shaft, and a field magnet mounted on the other of said opposed portions;
wherein an upper end and a lower end of said rotary shaft and a lower end of said tubular rotary shaft are supported through bearings with magnetic repulsion for constantly levitating said upper end and said lower ends in axial directions and maintaining said upper end and said lower ends out of contact in radial directions, and an upper end of said tubular rotary shaft is supported through a bearing to be out of contact at least in the radial directions.

3. A wind-driven power generating apparatus as defined in claim 2, wherein each of the bearings for supporting said upper end and said lower end of said rotary shaft includes a first permanent magnet fixed to one of said upper end and said lower end of said rotary shaft, a second permanent magnet disposed on an apparatus frame and opposed to said first permanent magnet, said first permanent magnet and said second permanent magnet repelling each other to levitate and maintain said rotary shaft out of contact, and a third permanent magnet disposed on said apparatus frame and surrounding said first permanent magnet, said first permanent magnet and said third permanent magnet repelling each other to maintain said rotary shaft out of contact in the radial directions as well.

4. A wind-driven power generating apparatus as defined in claim 2, wherein the bearing for supporting said lower end of said tubular rotary shaft includes a first permanent magnet fixed to said lower end of said tubular rotary shaft, a second permanent magnet disposed on an apparatus frame and opposed to said first permanent magnet, said first permanent magnet and said second permanent magnet repelling each other to levitate and maintain said tubular rotary shaft out of contact, and a third permanent magnet disposed on said apparatus frame and surrounding said first permanent magnet, said first permanent magnet and said third permanent magnet repelling each other to maintain said tubular rotary shaft out of contact in the radial directions as well.

5. A wind-driven power generating apparatus as defined in claim 2 or 4, wherein the bearing for supporting said upper end of said tubular rotary shaft includes a permanent magnet disposed on said tubular rotary shaft, and a further permanent magnet disposed on an/said apparatus frame and surrounding said permanent magnet, said permanent magnet and said further permanent magnet repelling each other to maintain said tubular rotary shaft out of contact in the radial directions.

6. A wind-driven power generating apparatus as defined in any one of claims 2, 4 and 5, wherein said bearing for supporting said upper end of said tubular rotary shaft includes a permanent magnet fixed to said bearing, a further permanent magnet being opposed to said permanent magnet and disposed on a lower surface of a flat disk secured to said rotary shaft slightly above said bearing, said permanent magnet and said further permanent magnet repelling each other to levitate and maintain an intermediate portion of said rotary shaft out of contact.

7. A wind-driven power generating apparatus as defined in claim 2, wherein each of the bearings for maintaining said rotary shaft and said tubular rotary shaft out of contact in the radial directions includes electromagnets.

8. A wind-driven power generating apparatus as defined in any one of claims 2 to 4, wherein the magnets disposed on the apparatus frame for axially levitating said rotary shaft and said tubular rotary shaft, and the magnets disposed on the apparatus frame for maintaining said rotary shaft and said tubular rotary shaft out of contact in the radial directions comprise superconducting magnets.

9. A wind-driven power generating apparatus as defined in any one of claims 2 to 6, wherein the magnets disposed on the apparatus frame for maintaining said rotary shaft and said tubular rotary shaft out of contact in the radial directions comprise superconducting coils.

10. A wind-driven power generating apparatus as defined in any one of claims 1 to 3 and 7 to 9, wherein said rotary shaft supports, at the upper end thereof, wedge noses corresponding to upper and lower blades, respectively, and a wind vane rotatable in a non-contact fashion through a magnetic bearing, said wind vane having a posture maintaining device disposed in a lower position thereof for maintaining said wind vane spaced apart from posts by using magnetic repulsion.
